Europäisches Patentamt

European Patent Office

Office européen des brevets

(19)

(11) Veröffentlichungsnummer : **0 105 948**
**B1**

(12)

# EUROPÄISCHE PATENTSCHRIFT

(45) Veröffentlichungstag der Patentschrift :
20.02.85

(21) Anmeldenummer : 82109399.4

(22) Anmeldetag : 11.10.82

(51) Int. Cl.⁴ : **F 16 L 27/10**

(54) **Lösbare Klemmverbindung.**

(43) Veröffentlichungstag der Anmeldung :
25.04.84 Patentblatt 84/17

(45) Bekanntmachung des Hinweises auf die Patenterteilung : 20.02.85 Patentblatt 85/08

(84) Benannte Vertragsstaaten :
**AT BE CH DE FR GB IT LI LU NL SE**

(56) Entgegenhaltungen :
DE-B- 2 748 302
DE-C-   525 453
DE-U- 1 963 661
GB-A- 1 384 025
US-A- 4 186 949

(73) Patentinhaber : **Rost, Peter**
**Neugasse 31**
**CH-8006 Zürich (CH)**

(72) Erfinder : **Der Erfinder hat auf seine Nennung verzichtet**

(74) Vertreter : **Schwan, Gerhard, Dipl.-Ing.**
**Elfenstrasse 32**
**D-8000 München 83 (DE)**

Jouve, 18, rue St-Denis, 75001 Paris, France

EP 0 105 948 B1

## Beschreibung

Die Erfindung betrifft eine lösbare Klemmverbindung zum Befestigen von Dichtungsmanschetten für druckdichte flexible Verbindungen im Großanlagenbau, insbesondere von Kanälen großer Abmessungen, mit profilierten Klemmleisten zum Einspannen von Randwulsten der Dichtungsmanschette.

Es sind Klemmverbindungen bekannt (DE-B-1 267 490), bei denen die flachen Enden der Dichtungsmanschette zwischen Spannleisten mittels Schraubverbindungen eingeklemmt sind, die durch entsprechende Ausnehmungen im Randbereich der Dichtungsmanschette hindurchgreifen. Die Praxis hat gezeigt, daß mit solchen Klemmverbindungen keine druckdichte Abdichtung in zuverlässiger und reproduzierbarer Weise über längere Zeiträume hinweg erzielt werden kann. Insbesondere im Bereich der Ausnehmungen der Dichtungsmanschette kommt es immer wieder zu Undichtigkeiten. In dem Bemühen, diesem Mißstand abzuhelfen, wurden auch bereits lösbare Klemmverbindungen der eingangs, genannten Art entwickelt, bei denen die profilierten Klemmleisten durch Spannelemente, insbesondere Schraubverbindungen, angezogen werden, die jenseits der Enden der Dichtungsmanschette verlaufen, so daß die Dichtungsmanschette selbst frei von Ausnehmungen zur Durchführung der Spannelemente bleiben kann (FR-A-2 092 992 und DE-A-26 38 622). Bei diesen Klemmverbindungen legt sich die profilierte Klemmleiste gegen den Randwulst an, um diesen zwischen der Klemmleiste und einer Kanalwand oder einem Kanalflansch festzuspannen. Es erwies sich jedoch als schwierig, gerade bei Kanälen großer Abmessungen die mittels entsprechender Spannelemente, wie Schraubverbindungen, aufgebrachte Spannkraft so über den vollen Umfangsrand der Dichtungsmanschette einzustellen, daß einerseits die gewünschte Druckdichtigkeit sichergestellt, andererseits aber die Gefahr von Beschädigungen der Dichtungmanschette vermieden ist.

Der Erfindung liegt die Aufgabe zugrunde, eine lösbare Klemmverbindung zu schaffen, die es erlaubt, bei Einsatz im Großanlagenbau für Abmessungen und Querschnitte aller Art eine verläßliche Druckdichtigkeit auf einfache Weise zu gewährleisten.

Diese Aufgabe wird erfindungsgemäß dadurch gelöst, daß der Randwulst von einem auf die Dichtungsmanschette aufgesetzten, ringsumlaufenden, geschlitzten Spannring aus elastischem Werkstoff aufgenommen und die Klemmleiste mit einem dem Außenprofil des Spannringes angepaßten Abschnitt gegen den Spannring angepreßt ist.

Der geschlitzte Spannring umgreift den Randwulst allseitig. Er erlaubt es, auf diese Weise Spannkraft in besonders gleichmäßiger Verteilung auf den Randwulst aufzubringen. Spannkraftkonzentrationen, die zu Beschädigungen der Dichtungsmanschette und/oder der Randwulste führen können, lassen sich vermeiden ; gleichwohl kann die Spannkraft bei der Montage der Klemmverbindung problemlos in solcher Größe aufgebracht werden, daß die gewünschte Druckdichtigkeit sichergestellt ist.

Der Spannring kann zweckmäßig einen Hohlraum bilden, dessen Querschnitt im wesentlichen mit dem Querschnitt des Randwulstes übereinstimmt. Als besonders zweckmäßig erwies sich ein Spannring von im wesentlichen kreisförmigem Querschnitt. Im Interesse großflächiger Anlage- und Dichtflächen beträgt die Querschnittsabmessung des Spannringes vorteilhaft ein Mehrfaches der Querschnittsabmessung des Randwulstes.

Der Spannring kann zweckmäßig aus einem gummielastischen Werkstoff, wie Silikonkautschuk, einem wärme- und chemikalienbeständigen Fluorelastomer auf der Grundlage von Vinylidenfluorid-Hexafluorpropylen-Copolymerisaten oder dergleichen Werkstoffen gefertigt sein.

Zur weiteren Vergleichmäßigung der Spannkräfte sind vorzugsweise zum Anpressen der Klemmleiste an den Spannring Schraubverbindungen mit Kugelscheiben und Kegelpfannen vorgesehen. Teil der Schraubverbindungen können mit den Kanalwänden verschweißte Schraubbolzen sein. In Fällen, in denen von der Dichtungsmanschettenwand auf die Randwulste Zugkräfte ausgeübt werden, ist im eingespannten Zustand der Schlitz des Spannringes, durch den der an den Randwulst anschließende Teil der Dichtungsmanschette hindurchgeführt ist, vorzugsweise mit der Richtung der Zugkräfte im wesentlichen ausgerichtet, um eine besonders sichere Abdichtung zu gewährleisten.

Der elastische Spannring kann auf den Randwulst einfach aufgeschoben sein. Vorzugsweise wird der Spannring aber mit dem Randwulst fest verbunden, z. B. verschweißt oder verklebt.

Der Randwulst kann besonders einfach durch Umschlagen des Endes der Wand der Dichtungsmanschette um einen Innenkern ausgebildet sein. Zweckmäßig wird dabei der Innenkern mit der Dichtungsmanschettenwand fest verbunden, insbesondere verschweißt oder verklebt.

Die Erfindung ist im folgenden anhand von bevorzugten Ausführungsbeispielen näher erläutert. In den beiliegenden Zeichnungen zeigen :

Figur 1 eine lösbare Klemmverbindung zwischen einer Dichtungsmanschette und den einander zugewendeten Enden zweier Kanäle sowie

Figuren 2a, 2b, 3a und 3b abgewandelte Ausführungen der Klemmverbindung nach Fig. 1.

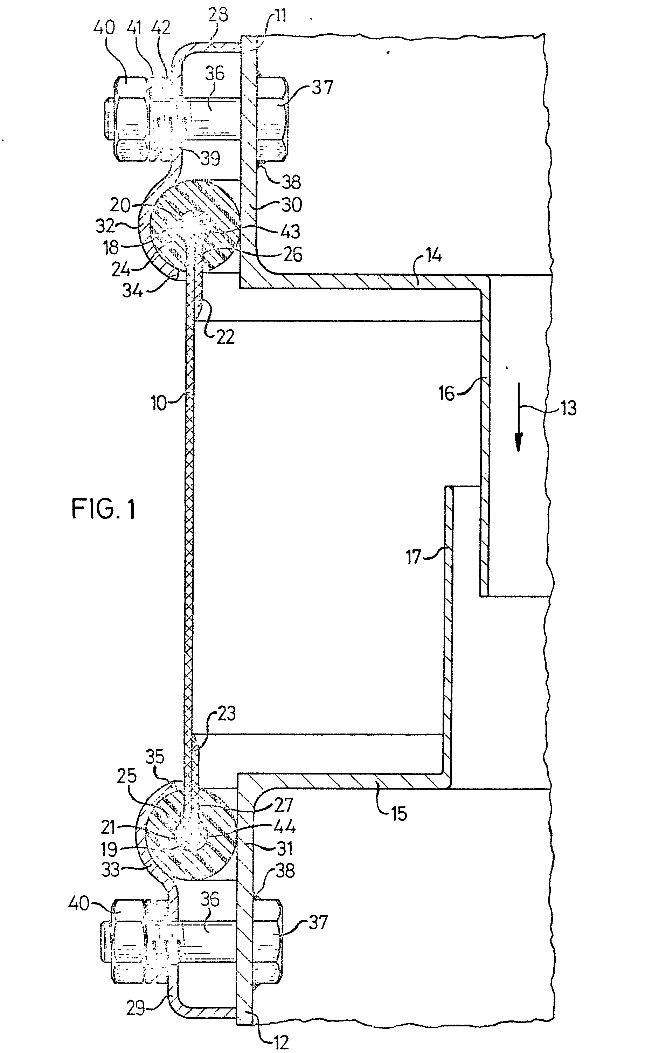

Bei der Ausführungsform nach Fig. 1 wird über eine Dichtungsmanschette 10 eine druckdichte flexible Verbindung zwischen den einander zugewendeten Enden 11, 12 zweier Kanäle hergestellt. Die Strömungsrichtung des durch die Kanäle hindurchgeleiteten Mediums, beispielsweise stark kondensathaltige Gase, ist mit dem Pfeil 13 angedeutet. Die Kanalenden 11, 12 sind bei 14 bzw. 15 radial nach innen abgesetzt, und sie tragen jeweils einen Abweiserring 16 bzw. 17. Die Dichtungsmanschette 10 weist an ihren beiden axialen Enden jeweils einen Randwulst 18, 19 auf. Die Randwulste werden dadurch gebildet, daß die Enden der Wandung der Dichtungsmanschette 10 um einen Innenkern 20 bzw. 21 nach innen herumgeschlagen sind. Die Innenkerne 20, 21 sind mit der Dichtungsmanschettenwand fest verbunden, z. B. verschweißt oder verklebt. In entsprechender Weise ist vorzugsweise für eine Verklebung oder Verschweißung der umgeschlagenen Enden 22 bzw. 23 gesorgt. Es versteht sich, daß die Enden 22, 23 statt, wie gezeigt, nach innen entsprechend einer abgewandelten Ausführungsform auch nach außen um die Innenkerne 20, 21 umgeschlagen sein können.

Jeder der Randwulste 18, 19 ist von einem auf die Dichtungsmanschette 10 aufgesetzten, ringsumlaufenden, geschlitzten Spannring 24 bzw. 25 umschlossen, der aus einem hochelastischen, vorzugsweise gummielastischen, Werkstoff mit hoher Medienbeständigkeit hergestellt ist. Die Schlitze 26, 27 der Spannringe 24, 25, durch welche der an den Randwulst 20 bzw. 21 anschließende Teil der Dichtungsmanschette 10 hindurchgeführt ist, sind mit der Axialrichtung (Pfeil 13) der Kanäle ausgerichtet. Mittels Klemmleisten 28, 29 werden die Spannringe 24, 25 gegen die Außenseite von Kanalwänden 30, 31 angedrückt. Die Klemmleisten 28, 29 weisen dabei einen gewölbten Abschnitt 32, 33 auf, der dem Außenprofil des Spannringes 24, 25 angepaßt ist. Die einander zugewendeten Enden 34, 35 der Klemmleisten 28, 29 enden in Umfangsrichtung der Spannringe 24, 25 in Abstand von den Schlitzen 26, 27, so daß die Wand der Dichtungsmanschette 10 nicht mit den Klemmleisten 28, 29 in Eingriff kommt. Durch Ausnehmungen (nicht gezeigt) der Kanalwände 30, 31 sind, in Umfangsrichtung der Kanalenden 11, 12 verteilt, Schraubbolzen 36 gesteckt, deren Köpfe 37 mit den Kanalwänden 11 bzw. 12 druckdicht verschweißt sind wie dies bei 38 angedeutet ist. Die Schraubbolzen 36 reichen radial nach außen durch Ausnehmungen 39 der Klemmleisten 28, 29 hindurch. Auf die Schraubbolzen 36 sind Spannmuttern 40 aufgesetzt, die sich gegen die Klemmleisten 28, 29 unter Zwischenfügung von Kugelscheiben 41 und Kegelpfannen 42 abstützen.

Durch Anziehen der Muttern 40 werden die Spannringe 24, 25 zwischen den Abschnitten 32, 33 der Klemmleisten 28, 29 und den Kanalwänden 30, 31 unter Herstellung einer druckdichten Abdichtung eingespannt. Beim Spannen der Klemmleisten 28, 29 werden gleichzeitig die Spannringe 24, 25 im Bereich ihrer die Randwulste 18, 19 aufnehmenden Hohlräume 43, 44 sowie der daran anschließenden Schlitze 26, 27 gegen die Randwulste und die benachbarten Teile der Dichtungsmanschette dichtend angepreßt. Dadurch wird eine sichere Abdichtung in diesem Bereich selbst dann erzielt, wenn die Spannringe 24, 25 auf die Randwulste 18, 19 nur lose aufgesteckt sind. Vorzugsweise ist jedoch zusätzlich eine feste Verbindung, z. B. Verklebung oder Verschweißung, zwischen den Spannringen 24, 25 und den damit in Eingriff stehenden Teilen der Dichtungsmanschette 10 vorgesehen. Die Schraubbolzen 36 liegen außerhalb des axialen Bereiches, über den sich die Dichtungsmanschette 10 erstreckt. Infolgedessen sind Ausnehmungen in der Dichtungsmanschette zur Durchführung der Schraubbolzen 36 vermieden. Fig. 1 läßt erkennen, daß bei einer Zunahme des in den Kanälen und damit auch in der Dichtungsmanschette 10 herrschenden Druckes die Dichtwirkung ansteigt, weil in der Dichtungsmanschettenwand wirkende Axialkräfte die Randwulste 18, 19 aus den Hohlräumen 43, 44 in die demgegenüber verengten Schlitze 26, 27 sowie die Spannringe 24, 25 in die verengten Durchlässe zwischen den Enden 34, 35 der Klemmleisten 28, 29 und den Kanalwänden 30, 31 hineinzuziehen suchen.

Als Werkstoff für die Dichtungsmanschette 10 eignen sich u. a. Folien aus Fluorkohlenstoffharzen (Teflon-eingetragenes Warenzeichen) und Mineralgewebe, aus Gummifolie mit Polyesterlagen oder dergleichen. Ferner können beschichtete Kevlar (eingetragenes Warenzeichen)-Gewebe und gummiartige synthetische Elastomere aus sulfochloriertem Polyäthylen (CSM), z. B. Hypalon (eingetragenes Warenzeichen)-Folien mit Stützgewebe vorgesehen sein. Im letztgenannten Fall wird vorzugsweise die Hypalonfolie wegen ihrer Säurefestigkeit auf der dem Medium zugekehrten Seite der Dichtungsmanschette 10 angeordnet, während ein außenliegendes Stützgewebe für eine hohe Reißfestigkeit sorgt. Die Innenkerne 20, 21 können zweckmäßig aus dem gleichen Werkstoff wie die Dichtungsmanschette 10 bestehen. Für die Spannringe 24, 25 eignen sich insbesondere Silikonkautschuk, wärme- und chemikalienbeständige Fluorelastomere auf der Basis von Vinylidenfluorid-Hexafluorpropylen-Copolymerisaten (Viton-eingetragenes Warenzeichen) und gummiartige synthetische Elastomere aus sulfochloriertem Polyäthylen (CSM), die z. B. unter dem Namen Hypalon (eingetragenes Warenzeichen) vertrieben werden. Die Querschnittsabmessung der Spannringe 24, 25 beträgt in der veranschaulichten Weise vorteilhaft ein Mehrfaches der Querschnittsabmessung der Randwulste 18, 19. Insbesondere kommen Spannringdurchmesser bis herauf zu etwa 40 mm in Frage.

Falls erwünscht, kann der Ringraum zwischen den Abweiserringen 16, 17 und der Dichtungsmanschette 10 mit wärmedämmendem Material ganz oder teilweise ausgefüllt sein.

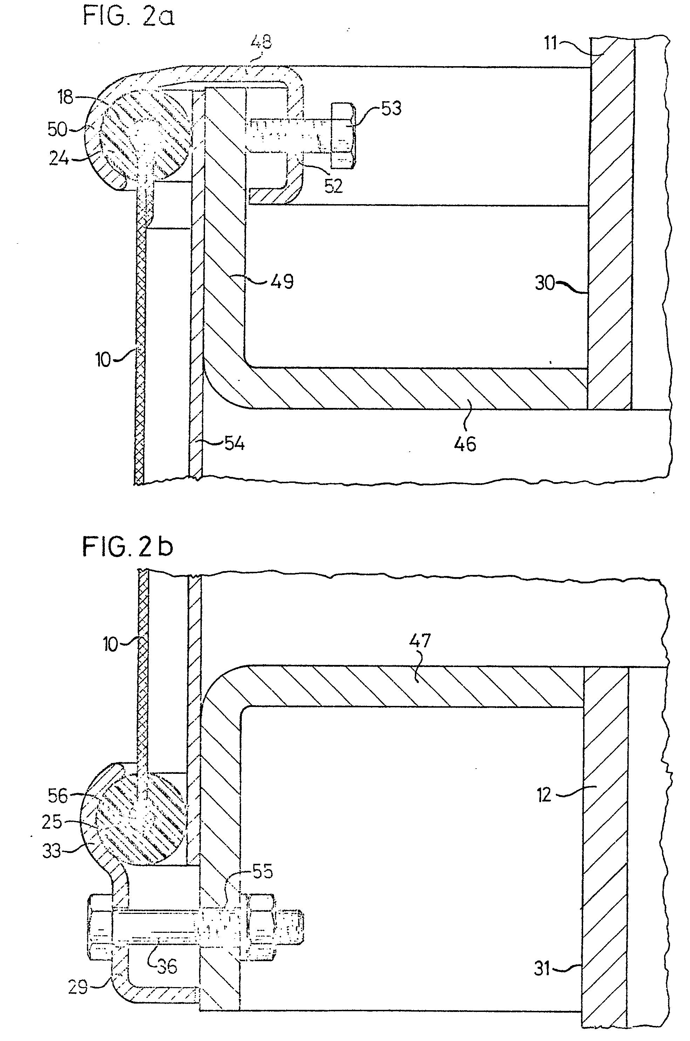

In den Fign. 2a und 2b sind abgewandelte Ausführungsformen veranschaulicht, bei denen an den Enden 11, 12 der Kanäle Winkelflansche 46, 47 angebracht sind. Im Falle der Anordnung nach Fig. 2a ist eine im wesentlichen J-Querschnitt aufweisende Klemmleiste 48 auf den zur Kanalwand 30 im wesentlichen parallel verlaufenden Schenkel 49 des Winkelflanschs 46 aufgesetzt. Die Klemmleiste 48 weist einen dem Außenprofil des Spannringes 24 angepaßten Abschnitt 50 und einen dem Abschnitt 50 im wesentlichen diametral gegenüberliegenden Schenkel mit einer Gewindebohrung 52 auf. In die Gewindebohrung 52 ist eine Spannschraube 53 eingeschraubt, die sich gegen den Schenkel 49 abstützt. Ein Abweiserring ist bei 54 angedeutet. Im übrigen ist die Klemmverbindung in der zuvor erläuterten Weise aufgebaut.

Bei der Ausführungsform nach Fig. 2b ist eine Klemmleiste entsprechend den Klemmleisten 32, 33 der Fig. 1 vorgesehen. Da in diesem Fall der Schraubbolzen 36 durch eine Ausnehmung 55 hindurchgeführt ist, die außerhalb des Kanalinnenraums liegt, kann auf ein druckdichtes Verschweißen der Schraubbolzen mit dem Winkelflansch 47 verzichtet werden. Abweichend von den zuvor erläuterten Ausführungsformen ist in Fig. 2b ein an der Dichtungsmanschette 10 unmittelbar angeformter Randwulst 56 vorhanden.

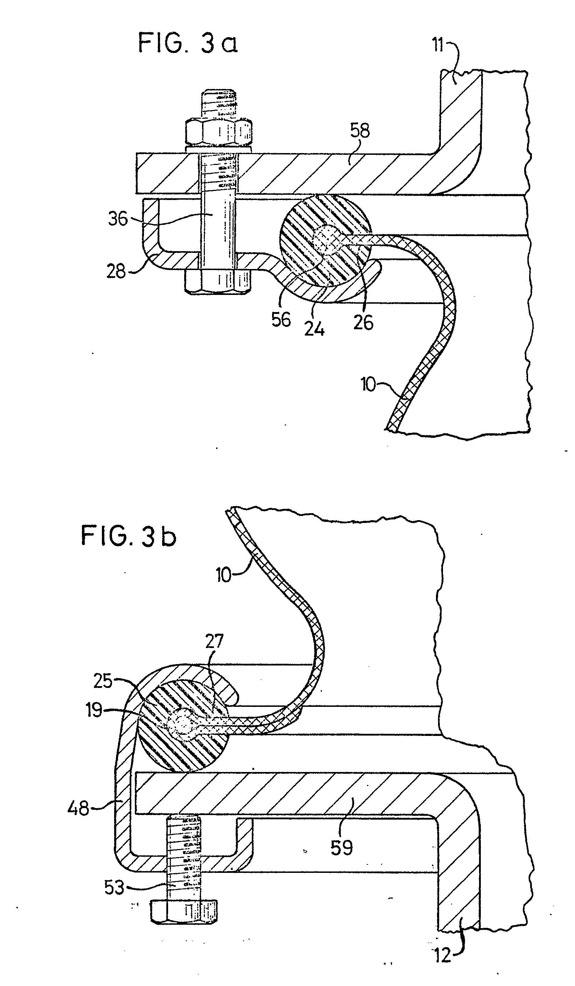

Bei den Ausführungsformen nach den Fign. 3a und 3b weisen die Kanalenden 11, 12 radial nach außen abstehende Ringflansche 58, 59 auf. In diesen Fällen sind die Schlitze 26, 27 der Spannringe 24, 25 im wesentlichen senkrecht zu der Axialrichtung der Kanäle ausgerichtet. Im übrigen entsprechen diese Ausführungsformen den zuvor erläuterten Ausführungsbeispielen.

## Ansprüche

1. Lösbare Kemmverbindung zum Befestigen von Dichtungsmanschetten (10) für druckdichte flexible Verbindungen im Großanlagenbau, insbesondere von Kanälen großer Abmessungen, mit profilierten Klemmleisten (28, 29) zum Einspannen von Randwulsten (18, 19, 56) der Dichtungsmanschette, dadurch gekennzeichnet, daß der Randwulst (18, 19, 56) von einem auf die Dichtungsmanschette (10) aufgesetzten, ringsumlaufenden, geschlitzten Spannring (24, 25) aus elastischem Werkstoff aufgenommen und die Klemmleiste (28, 29, 48) mit einem dem Außenprofil des Spannrings angepaßten Abschnitt (32, 33, 50) gegen den Spannring angepreßt ist.

2. Lösbare Klemmverbindung nach Anspruch 1, dadurch gekennzeichnet, daß der Spannring (24, 25) einen Hohlraum (43, 44) bildet, dessen Querschnitt im wesentlichen mit dem Querschnitt des Randwulstes (18, 19, 56) übereinstimmt.

3. Lösbare Klemmverbindung nach Anspruch 1 oder 2, dadurch gekennzeichnet, daß der Spannring (24, 25) einen im wesentlichen kreisringförmigen Querschnitt hat.

4. Lösbare Klemmverbindung nach einem der vorhergehenden Ansprüche, dadurch gekennzeichnet, daß die Querschnittsabmessung des Spannringes (24, 25) ein Mehrfaches der Querschnittsabmessung des Randwulstes (18, 19, 56) beträgt.

5. Lösbare Klemmverbindung nach einem der vorhergehenden Ansprüche, dadurch gekennzeichnet, daß der Spannring (24, 25) aus einem gummielastischen Werkstoff besteht.

6. Lösbare Klemmverbindung nach einem der vorhergehenden Ansprüche, dadurch gekennzeichnet, daß der Spannring (24, 25) aus einem synthetischen oder natürlichen Elastomer oder einem gleichartigen Werkstoff gefertigt ist.

7. Lösbare Klemmverbindung nach einem der vorhergehenden Ansprüche, dadurch gekennzeichnet, daß zum Anpressen der Klemmleiste (28, 29) an den Spannring (24, 25) Schraubverbindungen mit Kugelscheiben (41) und Kegelpfannen (42) vorgesehen sind.

8. Lösbare Klemmverbindung nach Anspruch 7, dadurch gekennzeichnet, daß Teil der Schraubverbindungen, mit den Kanalwänden verschweißte Schraubbolzen (36) sind.

9. Lösbare Klemmverbindung nach einem der vorhergehenden Ansprüche, dadurch gekennzeichnet, daß im eingespannten Zustand der Schlitz (26, 27) des Spannringes (24, 25), durch den der an den Randwulst (18, 19, 56) anschließende Teil der Dichtungsmanschette (10) hindurchgeführt ist, mit der Richtung (13) im wesentlichen ausgerichtet ist, in der Zugkräfte auf den Randwulst zu erwarten sind.

10. Lösbare Klemmverbindung nach einem der vorhergehenden Ansprüche, dadurch gekennzeichnet, daß der Spannring (24, 25) mit dem Randwulst fest verbunden ist.

11. Lösbare Klemmverbindung nach einem der vorhergehenden Ansprüche, dadurch gekennzeichnet, daß der Randwulst (18, 19) durch Umschlagen des Endes (22, 23) der Wand der Dichtungsmanschette (10) um einen Innenkern (20, 21) ausgebildet ist.

12. Lösbare Klemmverbindung nach Anspruch 11, dadurch gekennzeichnet, daß der Innenkern (20, 21) mit der Dichtungsmanschettenwand fest verbunden ist.

## Claims

1. A releaseable clamping connection for the fastening of sealing sleeves (10) for pressure tight flexible connection in large scale installations, more especially of pipes of large dimension, with profiled clamping bands (28, 29) for the fastening of beaded rims (18, 19, 56) of the sealing sleeve, characterised in that the beaded rim (18, 19, 45) is enclosed by a circularly surrounding, slotted tightening ring (24, 25) of elastic material arranged on the sealing sleeve (10) and the clamping band (28, 29, 48) is pressed against the tightening ring with a section (32, 33, 50) matched to the outer profile of the tightening ring.

2. A releaseable clamping connection according to Claim 1, characterised in that the tightening ring (24, 25) defines a hollow space (43, 44) of which the cross-section essentially corresponds with the cross-section of the beaded rim (18, 19, 56).

3. A releaseable clamping connection according to Claim 1 or 2, characterised in that the tightening ring (24, 25) has an essentially circular ring-shaped cross-section.

4. A releaseable clamping connection according to one of the preceding Claims, characterised in that the dimension of the cross-section of the tightening ring (24, 25) is a multiple of the cross-sectional dimension of the beaded rim (18, 19, 56).

5. A releaseable clamping connection according to one of the preceding Claims, characterised in that the tightening ring (24, 25) consists of a rubber elastic material.

6. A releaseable clamping connection according to one of the preceding Claims, characterised in that the tightening ring (24, 25) is formed from a synthetic or natural elastomer or a like material.

7. A releaseable clamping connection according to one of the preceding Claims, characterised in that screw connections with domed washers (41) and conically recessed washers (42) are provided for the pressing of the clamping bands (28, 29) on to the tightening ring (24, 25).

8. A releaseable clamping connection according to Claim 7, characterised in that parts of the screw connections are threaded bolts (36) welded to the pipe walls.

9. A releaseable clamping connection according to one of the preceding Claims, characterised in that the slot (26, 27) of the tightening ring (24, 25) through which extends that part of the sealing sleeve (10) connected to the beaded edge (18, 19, 56), is essentially aligned with the direction (13) in which tension on the beaded edge is to be expected, when in the fastened condition.

10. A releaseable clamping connection according to one of the preceding Claims, characterised in that the tightening ring (24, 25) is fixed to the beaded edge.

11. A releaseable clamping connection according to one of the preceding Claims, characterised in that the beaded edge (18, 19) is formed by turning the ends (22, 23) of the wall of the sealing sleeve (10) around an inner core (20, 21).

12. A releaseable clamping connection according to Claim 11, characterised in that the inner core (20, 21) is secured to the wall of the sealing sleeve.

**Revendications**

1. Dispositif d'assemblage séparable à serrage pour fixer des colliers d'étanchéité (10) destinés à des liaisons flexibles étanches à la pression dans la construction de grandes installations, en particulier de conduites de grandes dimensions, comportant des barrettes de pression profilées (28, 29), pour serrer les bourrelets (18, 19, 56) des bords du collier d'étanchéité caractérisé en ce que le bourrelet du bord (18, 19, 56) est reçu par une bague de serrage fendue (24, 25) circonférentiellement en une matière élastique, enfilée sur le collier d'étanchéité (10) et en ce que la barrette de pression (28, 29, 48) est pressée contre la bague de serrage le long d'une section (32, 33, 50) épousant le profil extérieur de la bague de serrage.

2. Dispositif d'assemblage séparable selon la revendication 1, caractérisé en ce que la bague de serrage (24, 25) forme une cavité (43, 44) dont la section correspond essentiellement à la section du bourrelet (18, 19, 56).

3. Dispositif d'assemblage séparable selon la revendication 1 ou 2, caractérisé en ce que la bague de serrage (24, 25) a essentiellement une section annulaire.

4. Dispositif d'assemblage séparable selon l'une quelconque des revendications précédentes, caractérisé en ce que les dimensions de la section de la bague de serrage (24, 25) sont un multiple des dimensions de la section du bourrelet (18, 19, 56).

5. Dispositif d'assemblage séparable selon l'une quelconque des revendications précédentes caractérisé en ce que la bague de serrage (24, 25) est en une matière élastique semblable au caoutchouc.

6. Dispositif d'assemblage séparable selon l'une quelconque des revendications précédentes caractérisé en ce que la bague de serrage (24, 25) est faite d'un élastomère synthétique ou naturel ou d'une matière analogue.

7. Dispositif d'assemblage séparable selon l'une quelconque des revendications précédentes, caractérisé en ce que, pour appliquer la barrette de pression (28, 29) contre la bague de serrage (24, 25) des liaisons par vissage utilisant des rondelles sphériques (41) et des rondelles coniques (42) sont prévues.

8. Dispositif de serrage selon la revendication 7 caractérisé en ce que des vis ou des boulons (36) soudés aux parois des conduites font partie des liaisons par vissage.

9. Dispositif d'assemblage séparable selon l'une quelconque des revendications précédentes, caractérisé en ce que, en état de serrage, la fente (26, 27) de la bague de serrage (24, 25) dans laquelle passe la partie du collier d'étanchéité (10) faisant suite au bourrelet (18, 19, 56) est orientée essentiellement dans la direction (13) des forces de traction qui sont à prévoir sur ledit bourrelet.

10. Dispositif d'assemblage séparable selon l'une quelconque des revendications précédentes, caractérisé en ce que la bague de serrage (24, 25) est reliée invariablement au bourrelet du bord.

11. Dispositif d'assemblage séparable selon l'une quelconque des revendications précédentes, caractérisé en ce que le bourrelet (18, 19) résulte du rabattement de l'extrémité (22, 23) de la paroi du collier d'étanchéité (10) autour d'un noyau (20, 21).

12. Dispositif d'assemblage séparable selon la revendication 11, caractérisé en ce que le noyau (20, 21) est relié invariablement à la paroi du collier d'étanchéité.

FIG. 1

FIG. 2a

FIG. 2b

FIG. 3 a

FIG. 3 b